# EUROPEAN PATENT SPECIFICATION

(11) **EP 2 876 845 B1**
(45) Date of publication and mention of the grant of the patent: **14.09.2016**
(21) Application number: 12886187.9
(22) Date of filing: 12.10.2012
(51) Int. Cl.: H04L 12/28, H04L 29/06, H04W 12/06, H04W 84/12, H04W 4/20, G06F 17/30, H04W 48/14

(54) **METHOD AND ADVERTISEMENT SERVER FOR PROVIDING NETWORK INFORMATION FOR TERMINAL**
VERFAHREN UND WERBESERVER ZUR BEREITSTELLUNG VON NETZWERKINFORMATIONEN FÜR EIN ENDGERÄT
PROCÉDÉ ET SERVEUR DE PUBLICITÉ FOURNISSANT DES INFORMATIONS DE RÉSEAU À UN TERMINAL

(43) Date of publication of application: 27.05.2015
(73) Proprietor: Huawei Technologies Co., Ltd., Longgang District Shenzhen, Guangdong 518129 (CN)
(72) Inventor: JIN, Weisheng, Shenzhen Guangdong 518129 (CN)
(74) Representative: Pfenning, Meinig & Partner mbB
(86) International application number: PCT/CN2012/082885
(87) International publication number: WO 2014/056202

(56) References cited:
- EP-A1- 2 897 415
- WO-A1-2013/148565
- WO-A1-2013/152744
- CN-A- 1 956 377
- CN-A- 1 956 378
- CN-A- 101 369 939
- US-A1- 2003 204 608
- US-A1- 2009 129 386
- US-A1- 2010 234 022
- US-A1- 2010 263 028
- US-A1- 2010 263 028

## Description

### TECHNICAL FIELD

The present invention relates to the communications field, and in particular, to a method for providing network information for a terminal, a notification server and computer program products.

### BACKGROUND

Globally, a large number of networks are established. Owners and operators of these networks are different, and manners for cooperation between operators, and between operators and network owners are also different. When a cellular network operator has no self-established Wi-Fi network, or when a user of the cellular network operator needs to access a network by means of Wi-Fi in a case in which an operator to which the user belongs does not deploy a Wi-Fi network, the cellular network operator and a Wi-Fi network operator need to establish a cooperation relationship, which at least can perform access authentication (routing of signaling for authentication) for a terminal. Currently, there is no Institute of Electrical and Electronics Engineers, Institute of Electrical and Electronics Engineers (IEEE) protocol defining a technical solution in which a terminal may initiate network information query when the terminal is located in a network other than a home network of the terminal.
US 2009/0129386 A1 discusses an access node for an Ethernet network connected between an access point for user devices and a broadband access server for access to a plurality of service providing networks. It includes a VLAN (virtual local area network) handling unit for handling a plurality of VLAN. A control unit commands the handling unit to transmit frames from a new user device connecting the access point into a first VLAN. The control unit also receives information from the broadband access server in respect to routing frames and it commands to the handling unit to transmit frames from the user device into a second VLAN as given by the information received from the broadband access server, the frames thereby being transmitted to a service providing network. WO 2013/148565 discloses the use of ANQP (Acces Network Query Protocol) servers to respond to network information queries.

### SUMMARY

In view of this, the present invention provides a method for providing network information for a terminal, and a network device, so that when a terminal is located in a first network other than a home network of the terminal, the terminal may obtain network information of a second network in real time by means of interaction between network devices, which has simple implementation and strong real-time performance.

A first aspect of the present invention provides a method for providing network information for a terminal, which may include:
receiving, by an access network query protocol, ANQP, server, a query request that is sent by a terminal currently located in a first network and is used for querying network information of a second network, where the first network is a non-home network of the terminal, and the second network is a home network of the terminal or a non-home network of the terminal;
obtaining, by the ANQP server, the network information of the second network from a first network device through an interface connected to the first network device; and
sending, by the ANQP server, the obtained network information of the second network to the terminal;
wherein the first network device is any one of an authentication-authorization-accounting server in the first network, an authentication-authorization-accounting broker server in the first network, an authentication-authorization-accounting proxy server in the first network, an authentication-authorization-accounting server in the second network interconnected with the first network, an authentication-authorization-accounting broker server in the second network interconnected with the first network, and an authentication-authorization-accounting proxy server in the second network interconnected with the first network.

With reference to the first aspect, in a first possible implementation manner, the obtaining, by the ANQP server, the network information of the second network from a first network device through an interface connected to the first network device includes:
sending, by the ANQP server, the query request to the first network device through the interface connected to the first network device, where the query request is used for querying the network information of the second network; and receiving the network information of the second network returned by the first network device.

With reference to the first aspect, in a second possible implementation manner, the obtaining, by the ANQP server, the network information of the second network from a first network device through an interface connected to the first network device includes:
receiving, by the ANQP server through the interface connected to the first network device, the network information of the second network actively pushed by the first network device to the ANQP server after the network information of the second network is updated.

With reference to the first aspect, the first possible implementation manner of the first aspect or the second possible implementation manner of the first aspect, in a third possible implementation manner of the first aspect the network informations of the second network is obtained by the first network device from a second network device through an interface connected to the second network device.

With reference to the third possible implementation manner of the first aspect, in a fourth possible implementation manner:
the second network device is any one of an authentication-authorization-accounting server in the first network, an authentication-authorization-accounting broker server in the first network, an authentication-authorization-accounting proxy server in the first network, an authentication-authorization-accounting server in the second network interconnected with the first network, an authentication-authorization-accounting broker server in the second network interconnected with the first network, and an authentication-authorization-accounting proxy server in the second network interconnected with the first network.

With reference to the first aspect, the first possible implementation manner of the first aspect, the second possible implementation manner of the first aspect, the third possible implementation manner of the first aspect, or the fourth possible implementation manner of the first aspect, in a fifth possible implementation manner of the first aspect, the network information of the second network includes one or more of a network access identifier home domain, Extensible Authentication Protocol information, 3GPP cellular network information, IP address type information, a roaming consortium list, network authentication type information, network charge rate information, and network charge discount information.

A second aspect of the present invention provides a access network query protocol, ANQP, server, including:
a receiving module, configured to receive a query request that is sent by a terminal currently located in a first network and is used for querying network information of a second network, where the first network is a non-home network of the terminal, and the second network is a home network of the terminal or a non-home network of the terminal;
an obtaining module, configured to obtain the network information of the second network from a first network device through an interface connected to the first network device; and
a sending module, configured to send the obtained network information of the second network to the terminal;
wherein the first network device is any one of an authentication-authorization-accounting server in the first network, an authentication-authorization-accounting broker server in the first network, an authentication-authorization-accounting proxy server in the first network, an authentication-authorization-accounting server in the second network interconnected with the first network, an authentication-authorization-accounting broker server in the second network interconnected with the first network, and an authentication-authorization-accounting proxy server in the second network interconnected with the first network.

With reference to the second aspect, in a first possible implementation manner, the obtaining module is specifically configured to send the query request to the first network device through the interface connected to the first network device, where the query request is used for querying the network information of the second network; and receive the network information of the second network returned by the first network device.

With reference to the second aspect, in a second possible implementation manner, the obtaining module is specifically configured to receive, through the interface connected to the first network device, the network information of the second network actively pushed by the first network device to the notification server after the network information of the second network is updated.

With reference to the second aspect, the first possible implementation manner of the second aspect, or the second possible implementation manner of the second aspect, in a third possible implementation manner of the second aspect, the network information of the second network includes one or more of a network access identifier home domain. Extensible Authentication Protocol information, 3GPP cellular network information, IP address type information, a roaming consortium list, network authentication type information, network charge rate information, and network charge discount information.

A third aspect of the present invention provides a computer storage medium, where the computer storage medium can store a program, and when the program runs, a part of or all steps in the method for providing network information for a terminal according to the present invention may be included.

A fourth aspect of the present invention provides a network device, including: a receiving apparatus, a sending apparatus, and an interface apparatus, where
the receiving apparatus is configured to receive a query request that is sent by a terminal currently located in a first network and is used for querying network information of a second network, where the first network is a non-home network of the terminal, and the second network is a home network of the terminal or a non-home network of the terminal;
the interface apparatus is configured to obtain the network information of the second network from a first network device; and
the sending apparatus is configured to send the terminal the network information of the second network obtained from the interface apparatus.

With reference to the fourth aspect, in a first possible implementation manner, the interface apparatus is specifically configured to send the first network device the query request for querying the network information of the second network, and receive the network information of the second network returned by the first network device.

With reference to the fourth aspect, in a second possible implementation manner, the interface apparatus is specifically configured to receive the network information of the second network actively pushed by the first network device to the notification server after the network information of the second network is updated.

With reference to the fourth aspect, the first possible implementation manner of the fourth aspect, or the second possible implementation manner of the fourth aspect, in a third possible implementation manner, the first network device is any one of an authentication-authorization-accounting server in the first network, an authentication-authorization-accounting broker server in the first network, an authentication-authorization-accounting proxy server in the first network, an authentication-authorization-accounting server in the second network interconnected with the first network, an authentication-authorization-accounting broker server in the second network interconnected with the first network, and an authentication-authorization-accounting proxy server in the second network interconnected with the first network.

With reference to the fourth aspect, the first possible implementation manner of the fourth aspect, the second possible implementation manner of the fourth aspect, or the third possible implementation manner of the fourth aspect, in a fourth possible implementation manner, the network information of the second network includes one or more of a network access identifier home domain, Extensible Authentication Protocol information, 3GPP cellular network information, IP address type information, a roaming consortium list, network authentication type information, network charge rate information, and network charge discount information.

It can be seen from the foregoing that in some feasible implementation manners of the present invention, a notification server receives a query request that is sent by a terminal currently located in a first network and is used for querying network information of a second network, where the first network is a non-home network of the terminal, and the second network is a home network of the terminal or a non-home network of the terminal; the notification server obtains the network information of the second network from a first network device through an interface connected to the first network device; and the notification server sends the obtained information of the second network to the terminal. Therefore, when the terminal is located in the first network other than the home network of the terminal, the terminal may obtain the network information of the second network in real time by means of interaction between network devices, which has simple implementation and strong real-time performance.

### BRIEF DESCRIPTION OF DRAWINGS

FIG. 1 is a schematic flowchart of a first embodiment of a method for providing network information for a terminal according to the present invention;
FIG. 2 is a schematic flowchart of a second embodiment of a method for providing network information for a terminal according to the present invention;
FIG. 3 is a schematic flowchart of a third embodiment of a method for providing network information for a terminal according to the present invention;
FIG. 4 is a schematic structural composition diagram of a first embodiment of a notification server according to the present invention;
FIG. 5 is a schematic structural composition diagram of a second embodiment of a notification server according to the present invention;
FIG. 6 is a schematic flowchart of an embodiment of an access process of a terminal according to the present invention;
FIG. 7 is a schematic flowchart of another embodiment of an access process of a terminal according to the present invention; and
FIG. 8 is a schematic flowchart of another embodiment of an access process of a terminal according to the present invention.

### DESCRIPTION OF EMBODIMENTS

In some feasible implementation manners of the present invention, a notification server receives a query request that is sent by a terminal currently located in a first network and is used for querying network information of a second network, where the first network is a non-home network of the terminal, and the second network is a home network of the terminal or a non-home network of the terminal; the notification server obtains the network information of the second network from a first network device through an interface connected to the first network device; and the notification server sends the obtained information of the second network to the terminal. Therefore, when the terminal is located in the first network other than the home network of the terminal, the terminal may obtain the network information of the second network in real time by means of interaction between network devices, which has simple implementation and strong real-time performance.

The following further describes embodiments of the present invention in detail with reference to the accompanying drawings.

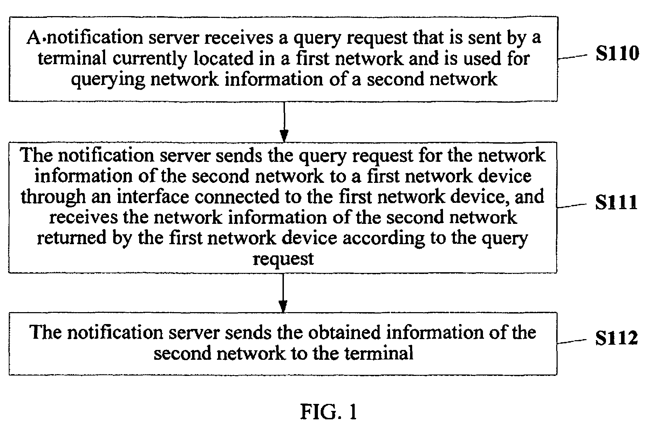

FIG. 1 is a schematic flowchart of a first embodiment of a method for providing network information for a terminal according to the present invention. As shown in FIG. 1, the method may include:
Step S110: A notification server receives a query request that is sent by a terminal currently located in a first network and is used for querying network information of a second network, where the first network is a non-home network of the terminal, and the second network is a home network of the terminal or a non-home network of the terminal.

In some feasible implementation manners, the first network in which the terminal is located may be any one of various wired or wireless networks, and may be, for example, a Wi-Fi network, a cellular network, or a fixed network.

In some feasible implementation manners, the notification server may be an Access Network Query Protocol (ANQP) server.

In some feasible implementation manners, the terminal mayuse an existing message to carry the request for the network information, which is required by the terminal, of the second network, and send the existing message to the notification server, for example, the request for the network information of the second network is carried in a sent generic advertisement service (GAS) request by the terminal, and in this case, the existing message is the query request for the network information of the second network in the present invention; or the terminal may dedicatedly generate a message of the query request for the network information of the second network to obtain, from the notification server, the network information, which is required by the terminal, of the second network.

In some feasible implementation manners, the network information of the second network in the present invention may include one or more of a network access identifier home domain, Extensible Authentication Protocol information, 3GPP cellular network information, IP address type information, a roaming consortium list, network authentication type information, network charge rate information, and network charge discount information. Information of the second network may be network information of the first network, the network information of the second network, or network information of another network except a home network of the terminal in the present invention.

In some feasible implementation manners, for the query request for the network information of the second network sent by the terminal or the notification server in the present invention, one request may carry a query request for network information of one or more networks.

Step S111: The notification server sends the query request for the network information of the second network to a first network device through an interface connected to the first network device, and receives the network information of the second network returned by the first network device according to the query request.

In some feasible implementation manners, a new dedicated data interface may be established between the notification server and the first network device to transmit the network information of the second network.

In some feasible implementation manners, the first network device in the present invention may be any one of an authentication-authorization-accounting server (AAA server) in the first network, an authentication-authorization-accounting broker server (AAA broker server) in the first network, an authentication-authorization-accounting proxy server (AAA proxy server) in the first network, an authentication-authorization-accounting server in the second network interconnected with the first network, an authentication-authorization-accounting broker server in the second network interconnected with the first network, and an authenticadon-authorization-accounting proxy server in the second network interconnected with the first network.

Step S 112: The notification server sends the obtained information of the second network to the terminal.

It can be understood that the second network in the present invention may also be any one of various wired or wireless networks, and a network type of the second network may be the same as a network type of the first network.

In some feasible implementation manners, the notification server may send the request for the network information of the second network to the first network device by using an existing message, for example, information about the request for the network information of the second network may be carried in a sent accessibility query request by the notification server, and in this case, the existing message is the query request for the network information of the second network in the present invention; or the notification server may dedicatedly generate a message of the query request for the network information of the second network to obtain the network information, which is required by the notification server, of the second network.

In some feasible implementation manners, the notification server or the first network device in the present invention may only send the terminal the network information, which is requested by the terminal, of the second network, and may also send, when the terminal requests a type of network information of the second network, the terminal all network information, which is possessed by the notification server or the first network device, of the second network, so as to save a subsequent query process of the terminal.

In some feasible implementation manners, when the terminal sends the query request for the network information of the second network, the notification server in the present invention may store, in the notification server, the network information of the second network obtained from the first network device, so that when the query request for the network information of the second network is subsequently received from the terminal again, a query result may be directly provided for the terminal, and the process described in the first embodiment of the present invention does not need to be performed again. In addition, the notification server may set a period of validity for the storage of the network information of the second network; and when the network information of the second network stored in the notification server expires the set period of validity, the notification server needs to obtain the network information of the second network again.

It can be seen from the foregoing that in some feasible implementation manners of the present invention, a notification server receives a query request that is sent by a terminal currently located in a first network and is used for querying network information of a second network, and automatically queries and receives the network information of the second network from a first network device through an interface connected to the first network device. Therefore, when the terminal is located in the first network other than a home network of the terminal, the terminal may obtain the network information of the second network in real time by means of interaction between network devices, which has simple implementation and strong real-time performance.

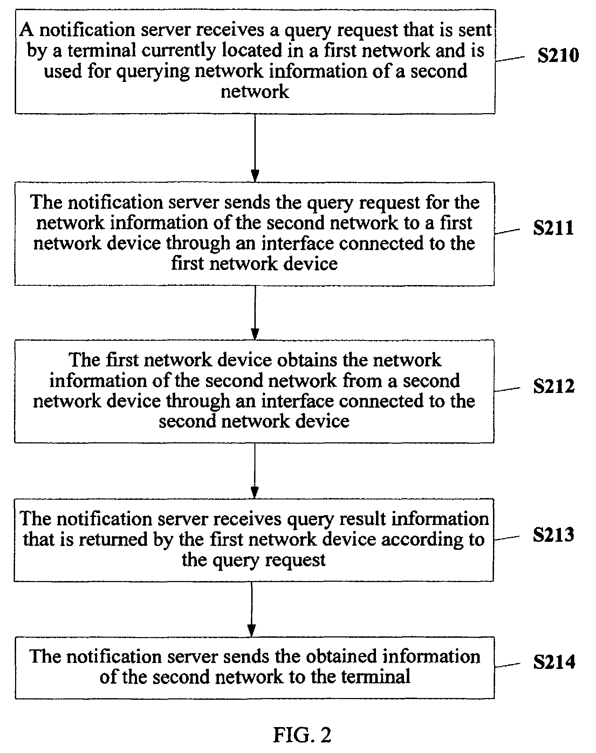

FIG. 2 is a schematic flowchart of a second embodiment of a method for providing network information for a terminal according to the present invention. This embodiment is an extension based on the first embodiment. As shown in FIG. 2, the method may include:
Step S210: A notification server receives a query request that is sent by a terminal currently located in a first network and is used for querying network information of a second network, where the first network is a non-home network of the terminal, and the second network is a home network of the terminal or a non-home network of the terminal.

In some feasible implementation manners, the first network in which the terminal is located may be any one of various wired or wireless networks, and may be, for example, a Wi-Fi network, a cellular network, or a fixed network.

In some feasible implementation manners, the notification server may be an Access Network Query Protocol server (ANQP server).

In some feasible implementation manners, the terminal may send the request for the network information of the second network by using an existing message, for example, the request for the network information of the second network may be carried in a sent GAS request by the terminal, and in this case, the existing message is the query request for the network information of the second network in the present invention; or the terminal may dedicatedly generate a message of the query request for the network information of the second network to obtain the network information, which is required by the terminal, of the second network.

In some feasible implementation manners, the network information of the second network in the present invention may include one or more of a network access identifier home domain, Extensible Authentication Protocol information, 3GPP cellular network information, IP address type information, a roaming consortium list, network authentication type information, network charge rate information, and network charge discount information.

Step S211: The notification server sends the query request for the network information of the second network to a first network device through an interface connected to the first network device.

In some feasible implementation manners, a new dedicated data interface may be established between the notification server and the first network device to transmit the query request for the network information of the second network.

In some feasible implementation manners, the first network device in the present invention may be any one of an authentication-authorization-accounting server (AAA server) in the first network, an authentication-authorization-accounting broker server (AAA broker server) in the first network, an authentication-authorization-accounting proxy server (AAA proxy server) in the first network, an authentication-authorization-accounting server in the second network interconnected with the first network, an authentication-authorization-accounting broker server in the second network interconnected with the first network, and an authentication-authorization-accounting proxy server in the second network interconnected with the first network. It can be understood that the second network in the present invention may also be any one of various wired or wireless networks, and a network type of the second network may be the same as a network type of the first network.

In some feasible implementation manners, the notification server may send the request for the network information of the second network to the first network device by using an existing message, for example, information about the request for the network information of the second network may be carried in a sent accessibility query request by the notification server, and in this case, the existing message is the query request for the network information of the second network in the present invention; or the notification server may dedicatedly generate a message of the query request for the network information of the second network to obtain the network information, which is required by the notification server, of the second network.

Step S212: The first network device obtains the network information of the second network from a second network device through an interface connected to the second network device.

In some feasible implementation manners, the first network device may send the query request for the network information of the second network to the first network device through the interface connected to the second network device, and receive query result information that is returned by the second network device according to the query request.

In some feasible implementation manners, the network information of the second network in the first network device may also be received and obtained from the second network device when related network information of the second network in the second network device is updated.

In some feasible implementation manners, the second network device is any one of an authentication-authorization-accounting server in the first network, an authentication-authorization-accounting broker server in the first network, an authentication-authorization-accounting proxy server in the first network, an authentication-authorization-accounting server in the second network interconnected with the first network, an authentication-authorization-accounting broker server in the second network interconnected with the first network, and an authentication-authorization-accounting proxy server in the second network interconnected with the first network.

Step S213: The notification server receives query result information that is returned by the first network device according to the query request, where the query result carries the network information, which is required by the notification server, of the second network.

In some feasible implementation manners, for the query request for the network information of the second network sent by the terminal, the notification server, or the first network device in the present invention, one request may carry a query request for network information of one or more second networks.

In some feasible implementation manners, the notification server, the first network device, or the second network device in the present invention may only send the terminal the network information, which is requested by the terminal, of the second network, and may also send, when the terminal requests a type of network information of the second network, the terminal all network information, which is possessed by the notification server or the first network device, of the second network.

Step S214: The notification server sends the obtained information of the second network to the terminal.

It can be seen from the foregoing that in some feasible implementation manners of the present invention, a notification server receives a query request that is sent by a terminal currently located in a first network and is used for querying network information of a second network, and queries and receives the network information of the second network from a first network device through an interface connected to the first network device; and the first network device also automatically queries and receives the network information of the second network from a second network device through an interface connected to the second network device. Therefore, when the terminal is located in the first network other than a home network of the terminal, the terminal may obtain the network information of the second network in real time by means of interaction between network devices, which has simple implementation and strong real-time performance.

It can be understood that when the notification server sends the query request for the network information of the second network, the first network device in the present invention may store, in the first network device, the network information of the second network obtained from the second network device, so that when the query request for the network information of the second network is subsequently received from the notification server again, a query result may be directly provided for the notification server.

It can be understood that based on the first embodiment and the second embodiment, the second network device or another network device may also obtain the network information of the second network by using a manner similar to that of this embodiment, and a process thereof is similar to a manner of the notification server and the first network device in this embodiment, and is not described in detail herein.

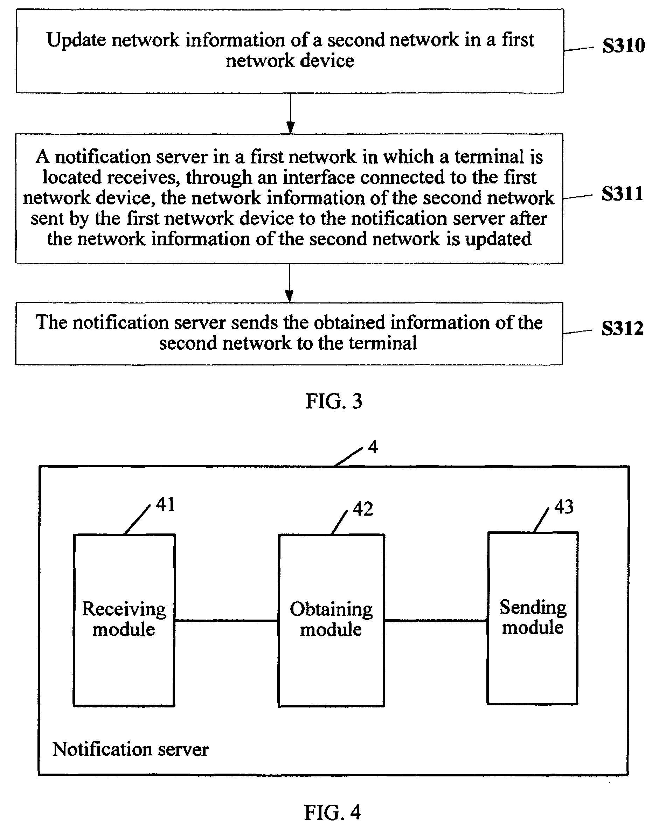

FIG. 3 is a schematic flowchart of a third embodiment of a method for providing network information for a terminal according to the present invention. As shown in FIG. 3, the method may include:
Step S310: Update network information of a second network in a first network device.

In some feasible implementation manners, the first network device in the present invention may be any one of an authentication-authorization-accounting server (AAA server, Authentication-Authorization-Accounting server) in a first network, an authentication-authorization-accounting broker server (AAA broker server) in the first network, an authentication-authorization-accounting proxy server (AAA proxy server) in the first network, an authentication-authorization-accounting server in the second network interconnected with the first network, an authentication-authorization-accounting broker server in the second network interconnected with the first network, and an authentication-authorization-accounting proxy server in the second network interconnected with the first network.

In some feasible implementation manners, the first network may be any one of various wired or wireless networks, and may be, for example, a Wi-Fi network, a cellular network, or a fixed network. It can be understood that the second network in the present invention may also be any one of various wired or wireless networks, and a network type of the second network may be the same as a network type of the first network.

In some feasible implementation manners, the network information of the second network in the present invention may include one or more of a network access identifier home domain, Extensible Authentication Protocol information, 3GPP cellular network information, IP address type information, a roaming consortium list, network authentication type information, network charge rate information, and network charge discount information.

Step S311: A notification server in a first network in which a terminal is located receives, through an interface connected to the first network device, the network information of the second network sent by the first network device to the notification server after the network information of the second network is updated, where the first network is a non-home network of the terminal, and the second network is a home network of the terminal or a non-home network of the terminal.

In some feasible implementation manners, the notification server may receive, through an existing data interface connected to the first network device, the network information of the second network sent by the first network device, or a new dedicated data interface may be established between the notification server and the first network device to transmit the network information of the second network.

In some feasible implementation manners, the first network device may only send the notification server the network information, which is requested by the terminal, of the second network, and may also send, when the terminal requests a type of network information of the second network, the notification server all network information, which is possessed by the first network device, of the second network, so that the notification server uses the network information subsequently.

In some feasible implementation manners, the notification server in the present invention may store, in the notification server, the network information of the second network obtained from the first network device, so that when the query request for the network information of the second network is subsequently received from the terminal again, a query result may be directly provided for the terminal. In addition, the notification server may set a period of validity for the storage of the network information of the second network; and when the network information of the second network stored in the notification server expires the set period of validity, the notification server needs to obtain the network information of the second network again.

In some feasible implementation manners, the first network device may send the query request for the network information of the second network to the first network device through an interface connected to a second network device, and receive query result information that is returned by the second network device according to the query request.

In some feasible implementation manners, the network information of the second network in the first network device may also be automatically received and obtained from the second network device when related network information of the second network in the second network device is updated.

In some feasible implementation manners, the second network device is any one of an authentication-authorization-accounting server in the first network, an authentication-authorization-accounting broker server in the first network, an authentication-authorization-accounting proxy server in the first network, an authentication-authorization-accounting server in the second network interconnected with the first network, an authentication-authorization-accounting broker server in the second network interconnected with the first network, and an authentication-authorization-accounting proxy server in the second network interconnected with the first network.

Step S312: The notification server sends the obtained information of the second network to the terminal.

It can be seen from the foregoing that in some feasible implementation manners of the present invention, when network information of a second network in a first network device possessing the network information of the second network is updated, a notification server of a first network in which a terminal is located obtains the network information of the second network from the first network device through an interface connected to a second network device. Therefore, when the terminal is located in a first network other than a home network of the terminal, the terminal may obtain the network information of the second network in real time by means of interaction between network devices, which has simple implementation and strong real-time performance.

To better implement solutions of the method embodiments of the present invention, an embodiment of the present invention further provides a related apparatus.

FIG. 4 is a schematic structural composition diagram of a first embodiment of a notification server in the present invention, where the notification server can be configured to implement the method embodiments of the present invention. In some feasible implementation manners, a notification server 4 may be an Access Network Query Protocol server (ANQP server). As shown in FIG. 4, the notification server 4 in the present invention may include a receiving module 41, an obtaining module 42, and a sending module 43.

The receiving module 41 is configured to receive a query request, which is sent by the terminal, for network information of a second network, where the first network is a non-home network of the terminal, and the second network is a home network of the terminal or a non-home network of the terminal.

The obtaining module 42 is configured to obtain the network information of the second network from a first network device through an interface connected to the first network device.

The sending module 43 is configured to send the obtained network information of the second network to the terminal.

In some feasible implementation manners, the network information of the second network may include one or more of a network access identifier home domain, Extensible Authentication Protocol information, 3GPP cellular network information, IP address type information, a roaming consortium list, network authentication type information, network charge rate information, and network charge discount information.

In some feasible implementation manners, the first network device may be any one of an authentication-authorization-accounting server (AAA server, Authentication-Authorization-Accounting server) in the first network, an authentication-authorization-accounting broker server (AAA broker server) in the first network, an authentication-authorization-accounting proxy server (AAA proxy server) in the first network, an authentication-authorization-accounting server in the second network interconnected with the first network, an authentication-authorization-accounting broker server in the second network interconnected with the first network, and an authentication-authorization-accounting proxy server in the second network interconnected with the first network.

In some feasible implementation manners, the first network may be any one of various wired or wireless networks, and may be, for example, a Wi-Fi network, a cellular network, or a fixed network. It can be understood that the second network in the present invention may also be any one of various wired or wireless networks, and a network type of the second network may be the same as a network type of the first network.

In some feasible implementation manners, the obtaining module 42 may be specifically configured to obtain the network information of the second network through a new dedicated interface that is established between the notification server and the first network device.

In some feasible implementation manners, the obtaining module 42 may specifically send the query request for the network information of the second network to the first network device through the interface connected to the first network device, and receive the network information of the second network returned by the first network device according to the query request.

In some feasible implementation manners, the obtaining module 42 may send the query request for the network information of the second network to the first network device by using an existing message, for example, information about the request for the network information of the second network may be carried in a sent accessibility query request by the obtaining module 42, and in this case, the existing message is the query request for the network information of the second network in the present invention; or the obtaining module 42 may dedicatedly generate a message of the query request for the network information of the second network to obtain the network information, which is required by the obtaining module 42, of the second network.

In some feasible implementation manners, when the network information of the second network in a second network device is updated, the obtaining module 42 may specifically receive, through the interface connected to the first network device, the network information of the second network sent by the first network device to the notification server after the network information of the second network is updated.

In some feasible implementation manners, the notification server or the first network device in the present invention may only send the terminal the network information, which is requested by the terminal, of the second network, and may also send, when the terminal requests a type of network information of the second network, the terminal all network information, which is possessed by the notification server or the first network device, of the second network, so as to save a subsequent query process of the terminal.

In some feasible implementation manners, the notification server may store, in the network device, the network information of the second network obtained from the first network device, so that when the query request for the network information of the second network is subsequently received from the terminal again, a query result may be directly provided for the terminal and does not need to be obtained again from the first network device. In addition, the notification server may set a period of validity for the storage of the network information of the second network; and when the network information of the second network stored in the notification server expires the set period of validity, the notification server needs to obtain the network information of the second network again.

It can be seen from the foregoing that in some feasible implementation manners of the present invention, a notification server receives a query request that is sent by a terminal currently located in a first network and is used for querying network information of a second network, and automatically queries and receives the network information of the second network from a first network device through an interface connected to the first network device. Therefore, when the terminal is located in the first network other than a home network of the terminal, the terminal may obtain the network information of the second network in real time by means of interaction between network devices, which has simple implementation and strong real-time performance.

During specific implementation, the present invention further provides a computer storage medium, where the computer storage medium can store a program, and when the program runs, a part of or all steps in embodiments of a method for providing network information for a terminal according to the present invention may be included. The storage medium may be a magnetic disk, an optical disc, a read-only memory (OM), a random access memory (RAM), or the like.

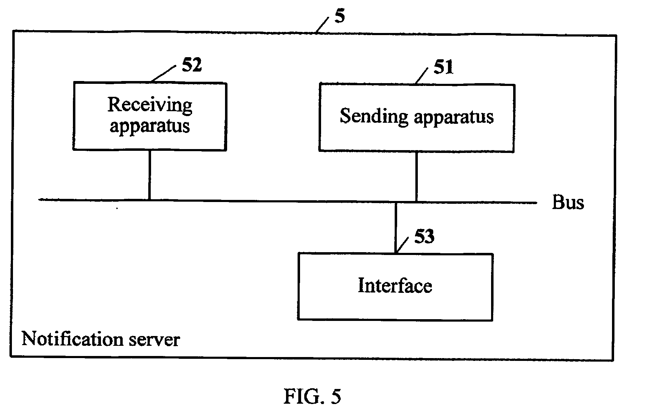

During specific implementation, as shown in FIG. 5, the present invention further provides a notification server 5, which may include: a receiving apparatus 51, a sending apparatus 52, and an interface 53 between the notification server and a first network device. During specific implementation, the receiving apparatus 51 and the sending apparatus 52 may be a transmit receive module. The receiving apparatus 51 is configured to receive a query request that is sent by a terminal currently located in a first network and is used for querying network information of a second network, where the first network is a non-home network of the terminal, and the second network is a home network of the terminal or a non-home network of the terminal. The interface 53 between the notification server and the first network device is configured to obtain the network information of the second network from the first network device. The sending apparatus 52 is configured to send the terminal the network information of the second network obtained from the interface between the notification server and the first network device.

In some feasible implementation manners, the notification server 5 may be an Access Network Query Protocol server (ANQP server).

In some feasible implementation manners, the interface 53 between the notification server and the first network device is specifically configured to send the query request for the network information of the second network to the first network device, and receive the network information of the second network returned by the first network device.

In some feasible implementation manners, the interface 53 between the notification server and the first network device is specifically configured to receive the network information of the second network actively pushed by the first network device to the notification server after the network information of the second network is updated.

In some feasible implementation manners, the network information of the second network may include one or more of a network access identifier home domain, Extensible Authentication Protocol information, 3GPP cellular network information, IP address type information, a roaming consortium list, network authentication type information, network charge rate information, and network charge discount information.

In some feasible implementation manners, the first network device may be any one of an authentication-authorization-accounting server (AAA server, Authentication-Authorization-Accounting server) in the first network, an authentication-authorization-accounting broker server (AAA broker server) in the first network, an authentication-authorization-accounting proxy server (AAA proxy server) in the first network, an authentication-authorization-accounting server in the second network interconnected with the first network, an authentication-authorization-accounting broker server in the second network interconnected with the first network, and an authentication-authorization-accounting proxy server in the second network interconnected with the first network.

In some feasible implementation manners, the first network may be any one of various wired or wireless networks, and may be, for example, a Wi-Fi network, a cellular network, or a fixed network. It can be understood that the second network in the present invention may also be any one of various wired or wireless networks, and a network type of the second network may be the same as a network type of the first network.

In some feasible implementation manners, the interface 53 between the notification server and the first network device may be a new data interface that is dedicatedly used for transmitting the network information of the second network and is established between the notification server and the first network device.

In some feasible implementation manners, the interface 53 between the notification server and the first network device may send the query request for the network information of the second network to the first network device by using an existing message, for example, information about the request for the network information of the second network may be carred in a sent accessibility query request by the interface 53 between the notification server and the first network device, and in this case, the existing message is the query request for the network information of the second network in the present invention; or the interface 53 between the notification server and the first network device may dedicatedly generate a message of the query request for the network information of the second network to obtain the network information, which is required by the interface 53 between the notification server and the first network device, of the second network.

In some feasible implementation manners, when the network information of the second network in a second network device is updated, the interface 53 between the notification server and the first network device may specifically receive the network information of the second network sent to the notification server after the network information of the second network is updated.

In some feasible implementation manners, the notification server or the first network device in the present invention may only send the terminal the network information, which is requested by the terminal, of the second network, and may also send, when the terminal requests a type of network information of the second network, the terminal all network information, which is possessed by the notification server or the first network device, of the second network, so as to save a subsequent query process of the terminal.

In some feasible implementation manners, the notification server may store, in the network device, the network information of the second network obtained from the first network device, so that when the query request for the network information of the second network is subsequently received from the terminal again, a query result may be directly provided for the terminal and does not need to be obtained again from the first network device. In addition, the notification server may set a period of validity for the storage of the network information of the second network; and when the network information of the second network stored in the notification server expires the set period of validity, the notification server needs to obtain the network information of the second network again.

It can be seen from the foregoing that in some feasible implementation manners of the present invention, a notification server receives a query request that is sent by a terminal currently located in a first network and is used for querying network information of a second network, and queries and receives the network information of the second network from a first network device through an interface connected to the first network device, which avoids that the network device manually obtains the network information, which is required by the terminal, of the second network, and has simple implementation and strong real-time performance.

The following further describes the embodiments of the present invention in detail with reference to specific application scenarios.

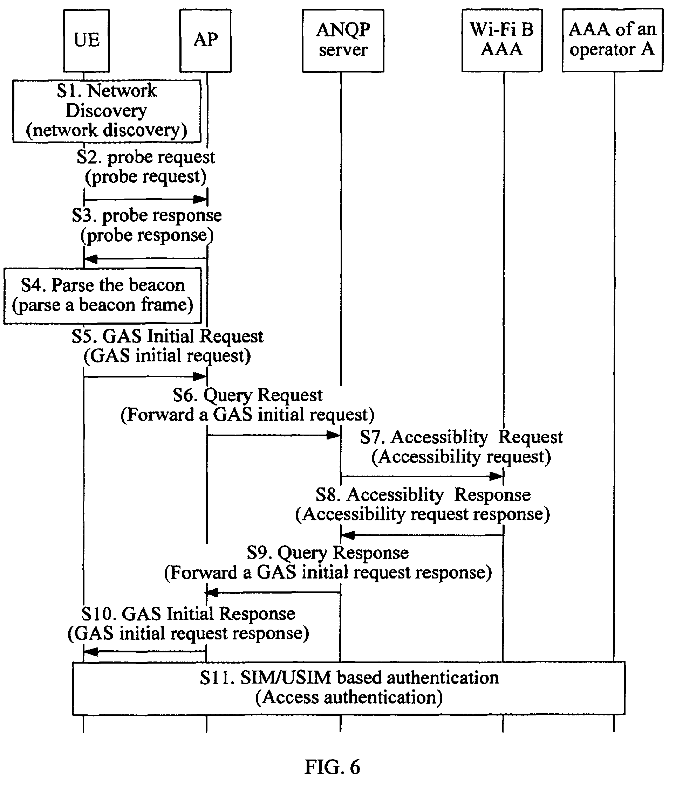

FIG. 6 is a schematic flowchart of an embodiment in which a terminal sends generic advertisement service query to a network device. In this process, a description is provided by using an example in which a terminal is currently located in a Wi-Fi network B of an operator B, a home network of the terminal is a network of an operator A, a notification server is an ANQP server in the Wi-Fi network B of the operator B, and a second network device is an AAA server in the Wi-Fi network B of the operator B. As shown in FIG. 6, the process includes:
Step S 1: A terminal of a mobile operator A prepares to perform network discovery.
Step S2: A user terminal sends a probe (probe) request to an access point AP
Step S3: The access point AP sends a probe response frame to the user terminal.
Step S4: The terminal parses a beacon frame (beacon frame), and when no configuration file corresponding to network information in the beacon frame exists in the terminal, discovers a Wi-Fi network that is a non-home network of the terminal, where during specific implementation, an AP in the Wi-Fi network in the present invention can support 802.11 u and Hotspot2.0.

In some feasible embodiments, only step S2 and step S3 may be performed, only step S4 is performed, or step S2 to step S4 are performed at the same time.

Step S5: The terminal sends a GAS initial request to the AP, where the GAS initial request carriesa query request (where the query request may be expressed by a protocol such as the ANQP) of which a network access identifier home domain is the operator A.

During specific implementation, if the terminal has multiple home networks, network access identifier home domains of all the home networks may be carried in one GAS initial request, and network access identifier home domains of different home networks may also be carried in multiple GAS initial requests.

Step S6: The AP forwards the query request (where a carried network access identifier home domain is marked as the operator A) to an ANQP server.

Step S7: The ANQP server sends an accessibility query request (where a carried network access identifier home domain is marked as the operator A) to an AAA Server in the Wi-Fi network B.

Step S8: The AAA Server in the Wi-Fi network B determines that access can be provided for the user terminal of the home network, and then, the AAA Server in the Wi-Fi sends an accessibility query response (which carries an access identifier home domain of the operator A) to the ANQP server, and may further carry back an authentication protocol extending method of the network, where if querying is performed on multiple home networks during this query, the AAA Server in the Wi-Fi network B sends, to the ANQP server in a response message, network access identifier home domains of home networks for which the Wi-Fi network can provide access, and carries back authentication protocol extending methods of all networks.

Step S9: The ANQP server returns network information in step S8 to the AP in a query response.

Step S10: The AP returns the network information to the user terminal in a GAS initial response.

It should be noted that the AP possibly does not feed all query results back to the user terminal in one response message, and may send all the query results to the user terminal in subsequent multiple comeback (comeback) request responses between the user terminal and the access point.

Step S11: The user terminal selects a home network (the network of the operator A) for which the Wi-Fi network B can provide access, so as to start a roaming network access process, initiates access authentication by using the authentication extending method (for example, EAP-SIM or EAP-AKA corresponding to a SIM/USIM card), which is obtained in the foregoing process, of the home network, and finally completes authentication on a user by the network of the operator A.

In the process, query of a network access identifier home domain is used as an example of query of network information of a second network, but actually, the terminal may independently use the foregoing query process to obtain available 3GPP cellular network information (for example, a PLMN ID List of a 3GPP network), available IP address type information, a roaming consortium list (Roaming Consortium List), network authentication type information (Network Authentication Type Information), charge rate information of a home network, discount information, and the like. The terminal may also obtain the information by querying in one query process; and when the terminal queries a piece of key information (for example, a network access identifier home domain), a network (AAA Server, ANQP server) may send related other information to the terminal by adding the related other information in a query response.

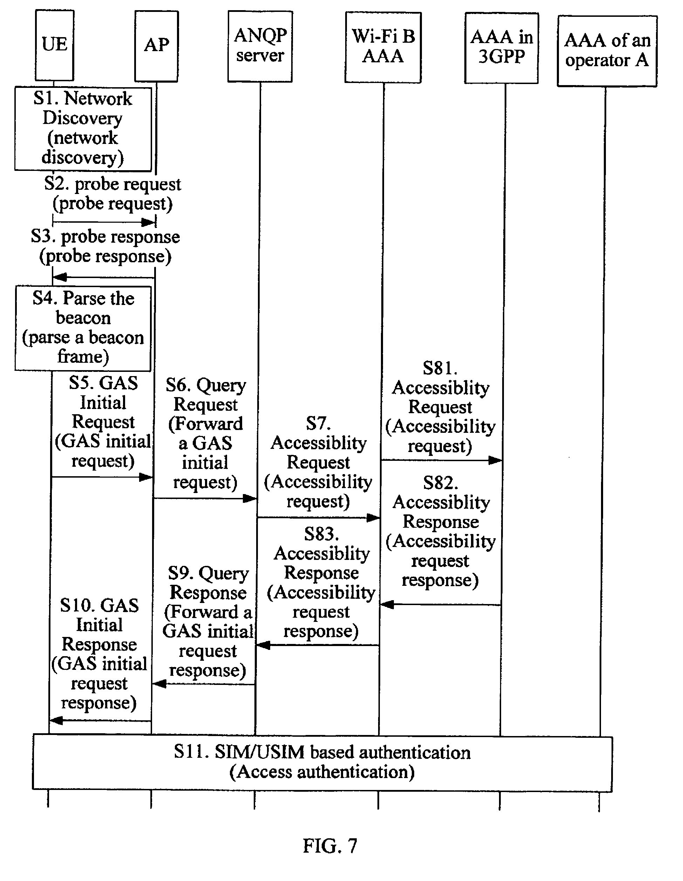

FIG. 7 is a schematic flowchart of another embodiment in which a terminal sends generic advertisement service query to a network device. In this process, a description is provided by using an example in which a terminal is currently located in a Wi-Fi network B of an operator B, a home network of the terminal is a network of an operator A, a notification server is an ANQP server in the Wi-Fi network B of the operator B, a second network device is an AAA server in the Wi-Fi network B of the operator B, and a second network device is an AAA server in a 3GPP network of the operator B. As shown in FIG. 7, the process includes:
Step S 1: A terminal of a mobile operator A prepares to perform network discovery.
Step S2: A user terminal sends a probe (probe) request to an access point AP.
Step S3: The access point AP sends a probe response frame to the user terminal.
Step S4: The terminal parses a beacon frame (beacon frame), and when no configuration file corresponding to network information in the beacon frame exists in the terminal, discovers a Wi-Fi network A that is not a home network of the terminal, where during specific implementation, an AP in the Wi-Fi network in the present invention can support 802.11u and Hotspot2.0.

In some feasible embodiments, only step S2 and step S3 may be performed, only step S4 is performed, or step S2 to step S4 are performed at the same time.

Step S5: The terminal sends a GAS initial request to the AP, where the GAS initial request carries a query request (where the query request may be expressed by a protocol such as the ANQP) of which a network access identifier home domain is the operator A.

During specific implementation, if the terminal has multiple home networks, network access identifier home domains of all the home networks may be carried in one GAS initial request, and network access identifier home domains of different home networks may also be carried in multiple GAS initial requests.

Step S6: The AP forwards the query request (where a carried network access identifier home domain is marked as the operator A) to an ANQP server.

Step S7: The ANQP server sends an accessibility query request (where a carried network access identifier home domain is marked as the operator A) to an AAA Server in the Wi-Fi network B.

Step S81: The AAA server in the Wi-Fi network B sends an accessibility query request (where a carried network access identifier home domain is marked as the operator A) to the AAA Server in the 3GPP network.

Step S82: The AAA Server in the 3GPP network sends an accessibility query response (which carries an access identifier home domain of the operator A) to the AAA server in the Wi-Fi network B.

Step S83: The AAA server in the Wi-Fi network B sends an accessibility query response (which carries the access identifier home domain of the operator A) to the ANQP server.

Step S9: The ANQP server returns network information in step S8 to the AP in a query response.

Step S10: The AP returns the network information to the user terminal in a GAS initial response.

It should be noted that the AP possibly does not feed all query results back to the user terminal in one response message, and may send all the query results to the user terminal in subsequent multiple comeback request responses between the user terminal and the access point.

Step S 11: The user terminal selects a home network (the operator A) for which the Wi-Fi network B can provide access, so as to start a roaming network access process, initiates access authentication by using the authentication extending method (for example, EAP-SIM or EAP-AKA corresponding to a SIM/USIM card), which is obtained in the foregoing process, of the home network, and finally completes authentication on a user by the network of the operator A.

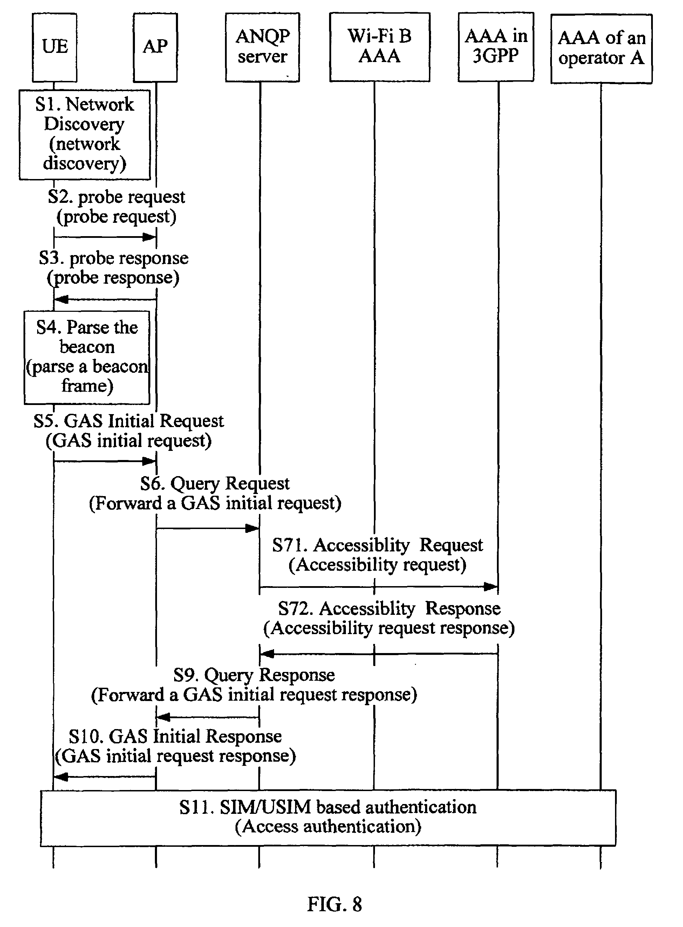

FIG. 8 is a schematic flowchart of another embodiment in which a terminal sends generic advertisement service query to a network device. In this process, a description is provided by using an example in which a terminal is currently located in a Wi-Fi network B of an operator B, a home network of the terminal is a Wi-Fi network A of an operator A, a notification server is an ANQP server in the Wi-Fi network B of the operator B, and a second network device is an AAA server in a 3GPP network. As shown in FIG. 8, the process includes:
Step S 1: A terminal of a mobile operator A prepares to perform network discovery.
Step S2: A user terminal sends a probe (probe) request to an access point AP.
Step S3: The access point AP sends a probe response frame to the user terminal.
Step S4: The terminal parses a beacon frame (beacon frame), and when no configuration file corresponding to network information in the beacon frame exists in the terminal, discovers a Wi-Fi network A that is not a home network of the terminal, where during specific implementation, an AP in the Wi-Fi network in the present invention can support 802.11 u and Hotspot2.0.

In some feasible embodiments, only step S2 and step S3 may be performed, only step S4 is performed, or step S2 to step S4 are performed at the same time.

Step S5: The terminal sends a GAS initial request to the AP, where the GAS initial request carriesa query request (where the query request may be expressed by a protocol such as the ANQP) of which a network access identifier home domain is the operator A.

During specific implementation, if the terminal has multiple home networks, network access identifier home domains of all the home networks may be carried in one GAS initial request, and network access identifier home domains of different home networks may also be carried in multiple GAS initial requests.

Step S6: The AP forwards the query request (where a carried network access identifier home domain is marked as the operator A) to an ANQP server.

Step S71: The ANQP server sends an accessibility query request (where a carried network access identifier home domain is marked as the operator A) to an AAA server in the 3GPP network.

Step S72: The AAA server in the 3GPP network sends an accessibility query response (which carries an access identifier home domain of the operator A) to the ANQP server.

Step S9: The ANQP server returns network information in step S8 to the AP in a query response.

Step S10: The AP returns the network information to the user terminal in a GAS initial response.

It should be noted that the AP possibly does not feed all query results back to the user terminal in one response message, and may send all the query results to the user terminal in subsequent multiple comeback (comeback) request responses between the user terminal and the access point.

Step S11: The user terminal selects a home network (the network of the operator A) for which the Wi-Fi network B can provide access, so as to start a roaming network access process, initiates access authentication by using the authentication extending method (for example, EAP-SIM or EAP-AKA corresponding to a SIM/USIM card), which is obtained in the foregoing process, of the home network, and finally completes authentication on a user by the network of the operator A.

Obviously, a person skilled in the art can make various modifications and variations to the present invention without departing from the scope of the present invention. The present invention is intended to cover these modifications and variations provided that they fall within the scope of protection defined by the following claims and their equivalent technologies.

## Claims

1. A method for providing network information for a terminal, **characterised by** comprising:
receiving (S110), by an access network query protocol, (ANQP, server, a query request that is sent by a terminal currently located in a first network and is used for querying network information of a second network, wherein the first network is a non-home network of the terminal, and the second network is a home network of the terminal or a non-home network of the terminal;
obtaining (S111), by the ANQP server, the network information of the second network from a first network device through an interface connected to the first network device; and
sending (S112), by the ANQP server, the obtained network information of the second network to the terminal,;
wherein the first network device is any one of an authentication-authorization-accounting server in the first network, an authentication-authorization-accounting broker server in the first network, an authentication-authorization-accounting proxy server in the first network, an authentication-authorization-accounting server in the second network interconnected with the first network, an authentication-authorization-accounting broker server in the second network interconnected with the first network, and an authentication-authorization-accounting proxy server in the second network interconnected with the first network.

2. The method for providing network information for a terminal according to claim 1, **characterised in, that** the obtaining (S111), by the ANQP server, the network information of the second network from a first network device through an interface connected to the first network device comprises:
sending, by the ANQP server, the query request to the first network device through the interface connected to the first network device, wherein the query request is used for querying the network information of the second network; and receiving the network information of the second network returned by the first network device.

3. The method for providing network information for a terminal according to claim 1, **characterised in, that** the obtaining (S111), by the ANQP server, the network information of the second network from a first network device through an interface connected to the first network device comprises:
receiving, by the ANQP server through the interface connected to the first network device, the network information of the second network actively pushed by the first network device to the ANQP server after the network information of the second network is updated.

4. The method for providing network information for a terminal according to any one of claims 1 to 3, **characterised in, that** the network information of the second network is obtained by the first network device from a second network device through an interface connected to the second network device.

5. The method for providing network information for a terminal according to claim 4, **characterised in, that** the second network device is any one of an authentication-authorization-accounting server in the first network, an authentication-authorization-accounting broker server in the first network, an authentication-authorization-accounting proxy server in the first network, an authentication-authorization-accounting server in the second network interconnected with the first network, an authentication-authorization-accounting broker server in the second network interconnected with the first network, and an authentication-authorization-accounting proxy server in the second network interconnected with the first network.

6. The method for providing network information for a terminal according to any one of claims 1 to 5, **characterised in, that** the network information of the second network comprises one or more of a network access identifier home domain, Extensible Authentication Protocol information, 3GPP cellular network information, IP address type information, a roaming consortium list, network authentication type information, network charge rate information, and network charge discount information.

7. A system for providing network information for a terminal, **characterised by** comprising:
a receiving module (41), configured to receive a query request that is sent by a terminal currently located in a first network and is used for querying network information of a second network, wherein the first network is a non-home network of the terminal, and the second network is a home network of the terminal or anon-home network of the terminal;
an obtaining module (42), configured to obtain the network information of the second network from a first network device through an interface connected to the first network device; and
a sending module (43), configured to send the obtained network information of the second network to the terminal;
wherein the first network device is any one of an authentication-authorization-accounting server in the first network, an authentication-authorization-accounting broker server in the first network, an authentication-authorization-accounting proxy server in the first network, an authentication-authorization-accounting server in the second network interconnected with the first network, an authentication-authorization-accounting broker server in the second network interconnected with the first network, and an authentication-authorization-accounting proxy server in the second network interconnected with the first network.

8. The system according to claim 7, **characterised in, that** the obtaining module is specifically configured to send the query request to the first network device through the interface connected to the first network device, wherein the query request is used for querying the network information of the second network; and receive the network information of the second network returned by the first network device.

9. The system according to claim 7, **characterised in, that** the obtaining module is specifically configured to receive, through the interface connected to the first network device, the network information of the second network actively pushed by the first network device to the ANQP server after the network information of the second network is updated,

10. The system according to any one of claims 7 to 9, **characterised in, that** the network information of the second network comprises one or more of a network access identifier home domain, Extensible Authentication Protocol information, 3GPP cellular network information, IP address type information, a roaming consortium list, network authentication type information, network charge rate information, and network charge discount information.

11. A computer program product, **characterised in,** comprising computer program code, which, when executed by a computer unit, will cause the computer unit to perform the steps in the method according to any one of claims 1 to 6.

12. A computer readable medium, **characterised in, that** computer program code according to claim 11 is stored on the computer readable medium,

## Patentansprüche

1. Verfahren zum Bereitstellen von Netzinformationen für ein Endgerät, **dadurch gekennzeichnet, dass** es Folgendes umfasst:
Empfangen (S110) einer Anfrageanforderung, die durch ein Endgerät gesendet wird,
das sich gerade in einem ersten Netz befindet, und zum Abfragen von Netzinformationen eines zweiten Netzes verwendet wird, durch einen "Access Network Query Protocol"- bzw. ANQP-Server, wobei das erste Netz ein Nicht-Heimatnetz des Endgerätes ist und das zweite Netz ein Heimatnetz des Endgeräts oder
ein Nicht-Heimatnetz des Endgeräts ist;
Erhalten (S111) der Netzimformationen des zweiten Netzes durch den ANQP-server von einer ersten Netzvorrichtung mittels einer mit der ersten Netzvorrichtung verbundenen Schnittstelle; und
Senden (S112) der erhaltenen Netzinformationen des zweiten Netzes zu dem Endgerät durch den ANQP-Server;
wobei die erste Netzvorrichtung eine beliebige der Folgenden ist: ein "Authentication-Authorization-Accouting"-Server im ersten Netz, ein "Authentication-Authorization-Accounting Broker"-Server im ersten Netz, ein "Authentication-Authorization-Accounting"-Proxyserver im ersten Netz, ein "Authentication-Authorization-Accounting"-Server im zweiten Netz, verbunden mit dem ersten Netz, ein "Authentication-Authorization-Accounting-Broker"-Server im zweiten Netz, verbunden mit dem ersten Netz, und ein "Authentication-Authorization-Accounting"-Proxyserver im zweiten Netz, verbunden mit dem ersten Netz.

2. Verfahren zum Bereitstellen von Netzinformationen für ein Endgerät nach Anspruch 1, **dadurch gekennzeichnet, dass** das Erhalten (S111) der Netzinformationen des zweiten Netzes durch den ANQP-Server von einer ersten Netzvorrichtung mittels einer mit der ersten Setzvorrichtung verbundenen Schnittstelle Folgendes umfasst:
Senden der Anfrageanforderung zu der ersten Setzvorrichtung durch den ANQP-Server mittels der mit der ersten Setzvorrichtung verbundenen Schnittstelle, wobei die Anfrageanforderung zum Erfragen der Netzinformationen des zweiten Netzes verwendet wird; und Empfangen der Netzinformationen des zweiten Netzes, die durch die erste Netzvorrichtung zurückgegeben werde,

3. Verfahren zum Bereitstellen von Netzinformationen für ein Endgerät nach Anspruch 1, **dadurch gekennzeichnet, dass** das Erhalten (S111) der Netzinformationen des zweiten Netzes durch den ANQP-Server von einer ersten Setzvorrichtung mittels einer mit der ersten Netzvorrichtung verbundenen Schnittstelle Folgendes umfasst:
Empfangen der Netzinformationen des zweiten Netzes, die aktiv durch die erste Setzvorrichtung auf den ANQP-Server geschoben werden, durch den ANQP-server mittels der mit der ersten Netzvorrichtung verbundenen Schnittstelle, nachdem die Netzinformationen des zweiten Netzes aktualisiert werden.

4. Herfahren zum Bereitstellen von Netzinformationen für ein Endgerät nach einem der Ansprüche 1 bis 3, **dadurch gekennzeichnet, dass** die Netzinformationen des zweiten Netzes durch die erste Netzvorrichtung von einer zweiten Setzvorrichtung mittels einer mit der zweiten Netzvorrichtung verbundenen Schnittstelle erhalten werden.

5. Verfahren zum Bereitstellen von Netzinformationen für ein Endgerät nach Anspruch 4, **dadurch gekennzeichnet, dass** die zweite Netzvorrichtung eine beliebige der Folgenden ist; ein "Authentication-Authorization-Accouting"-Server im ersten Netz, ein "Authentication-Authorization-Accounting Broker"-Server im ersten Netz, ein "Authentication-Authorization-Accounting"-Proxyserver im ersten Netz, ein "Authentication-Authorization-Accounting"-Server im zweiten Netz, verbunden mit dem ersten Netz, ein "Authentication-Authorization-Accounting-Broker"-Server im zweiten Netz, verbunden mit dem ersten Netz, und ein "Authentication-Authorization-Accounting"-Proxyserver im zweiten Netz, verbunden mit dem ersten Netz.

6. Verfahren zum Bereitstellen von Netzinformationen für ein Endgerät nach einem der Ansprüche 1 bis 5, **dadurch gekennzeichnet, dass** die Netzinformationen des zweiten Netzes eine oder mehrere der folgenden Alternativen umfassen: eine Netzzugangskennungs-Heimatdomäne, "Extensible Authentication Protocol,"-Informationen, 3GPP-Mobilfunknezinformationen, IP-Adressentypinformationen, eine "Roaming Consortium"-Liste, Netzauthentifizierungstypinformationen, Netzvergebührungstarifinformationen und N'etzgebührenrabattinformationen.

7. System zum Bereitstellen von Netzinformationen für ein Endgerät, **dadurch gekennzeichnet, dass** es Folgendes umfasst:
ein Empfangsmodul (41), ausgelegt zum Empfangen einer Anfrageanforderung, die durch ein Endgerät gesendet wird, das sich gerade in einem ersten Netz befindet, und zum Abfragen von Netzinformationen eines zweiten Netzes verwendet wird, wobei das erste Netz ein Nicht-Heimatnetz des Endgerätes ist und das zweite Netz ein Heimatnetz des Endgeräts oder ein Nicht-Heimatnetz des Endgeräts ist;
ein Erhaltemodul (42), ausgelegt zum Erhalten der Netzinformationen des zweiten Netzes von einer ersten Netzvorrichtung mittels einer mit der ersten Netzvorrichtung verbundenen Schnittstelle; und
ein Sendemodul (43), ausgelegt zum Senden der erhaltenen Netzinformationen des zweiten Netzes zu dem Endgerät;
wobei die erste Netzvorrichtung eine beliebige der Folgenden ist: ein "Authentication-Authorization-Accouting"-Server im ersten Netz, ein "Authentication-Authorization-Accounting Broker"-Server im ersten Netz, ein "Authentication-Authorization-Accounting"-Proxyserver im ersten Netz, ein "Authentication-Auuthorization-Accounting"-Server im zweiten Netz, verbunden mit dem ersten Netz, ein Anthentication-Aulhorization-Accounting-Broker"-Server im zweiten Netz, verbunden mit dem ersten Netz, und ein Authentication-Authorization-Accounting"-Proxyserver im zweiten Netz, verbunden mit dem ersten Netz.

8. System nach Anspruch 7, **dadurch gekennzeichnet, dass** das Erhaltemodul spezifisch ausgelegt ist zum Senden der Anfrageanforderung zu der ersten Netzvorrichtung mittels der mit der ersten Netzvorrichtung verbundenen Schnittstelle, wobei die Anfrageanforderung zum Erfragen der Netzinformationen des zweiten Netzes verwendet wird; und Empfangen der Netzinformationen des zweiten Netzes, die durch die erste Netzvorrichtung zurückgegeben werden,

9. System nach Anspruch 7, **dadurch gekennzeichnet, dass** das Erhaltemodul spezifisch ausgelegt ist zum Empfangen der Netzinformationen des zweiten Netzes, die aktiv durch die erste Netzvorrichtung auf den ANQP-Server geschoben werden, mittels der mit der ersten Netzvorrichtung verbundenen Schnittstelle, nachdem die Netzinformationen des zweiten Netzes aktualisiert werden.

10. System nach einem der Ansprüche 7 bis 9, **dadurch gekennzeichnet, dass** die Netzinformationen des zweiten Netzes eine oder mehrere der folgenden Alternativen umfassen: eine Netzzugangskennungs-Heimatdomäne, Extensible Authentication Protocol"-Informationen, 3GPP-Mobilfunknetzinformationen, IP-Adressentypinformationen, eine "roaming Consortium"-Liste, Netzauthentifizierungstypinformationen, Neizvergebührungstarifinformationen und Netzgebührenrabattinformationen.

11. Computerprogrammprodukt, **dadurch gekennzeichnet, dass** es Computerprogrammcode umfasst, der, wenn er durch eine Computereinheit ausgeführt wird, bewirkt, dass die Computereinheit die Schritte in dem Verfahren nach einem der Ansprüche 1 bis 6 ausführt.

12. Computerlesbares Medium, dadurch gekenntzeichnet, dass Computerprogrammcode nach Anspruch 11 auf dem computerlesbaren Medium gespeichert ist.

## Revendications

1. Procédé pour fournir des informations de réseau pour un terminal, **caractérisé en ce qu'**il consiste à :
recevoir (S110), via un serveur de protocole d'interrogation de réseau d'accès ANQP, une demande d'interrogation qui est envoyée par un terminal situé actuellement dans un premier réseau et qui est utilisée pour interroger des informations de réseau d'un second réseau, lequel premier réseau est un réseau non domestique du terminal et lequel second réseau est un réseau domestique du terminal ou un réseau non domestique du terminal ;
obtenir (S111) avec le serveur ANQP les informations de réseau du second réseau depuis un dispositif de premier réseau via une interface connectée au dispositif de premier réseau ; et
envoyer (S112) avec le serveur ANQP les informations de réseau obtenues du second réseau au terminal ;
dans lequel le dispositif de premier réseau est l'un quelconque d'un serveur d'authentification-autorisation-comptabilité dans le premier réseau, d'un serveur de courtier d'authentification-autorisation-comptabilité dans le premier réseau, d'un serveur de mandataire d'authentification-autorisation-comptabilité dans le premier réseau, d'un serveur d'authentification-autorisation-comptabilité dans le second réseau interconnecté avec le premier réseau, d'un serveur de courtier d'authentification-autorisation-comptabilité dans le second réseau interconnecté avec le premier réseau et d'un serveur de mandataire d'authentification-autorisation-comptabilité dans le second réseau interconnecté avec le premier réseau.

2. Procédé pour fournir des informations de réseau pour un terminal selon la revendication 1, **caractérisé en ce que** l'obtention (S111) avec le serveur ANQP des informations de réseau du second réseau depuis un dispositif de premier réseau via une interface connectée au dispositif de premier réseau consiste à :
envoyer avec le serveur ANQP la demande d'interrogation au dispositif de premier réseau via l'interface connectée au dispositif de premier réseau, la demande d'interrogation étant utilisée pour interroger les informations de réseau du second réseau, et recevoir les informations de réseau du second réseau renvoyées par le dispositif de premier réseau.

3. Procédé pour fournir des informations de réseau pour un terminal selon la revendication 1, **caractérisé en ce que** l'obtention (S111) avec le serveur ANQP des informations de réseau du second réseau depuis un dispositif de premier réseau via une interface connectée au dispositif de premier réseau consiste à :
recevoir avec le serveur ANQP via l'interface connectée au dispositif de premier réseau, les informations de réseau du second réseau activement mises en avant par le dispositif de premier réseau vers le serveur ANQP une fois que les informations de réseau du second réseau sont mises à jour.

4. Procédé pour fournir des informations de réseau pour un terminal selon l'une quelconque des revendications 1 à 3, **caractérisé en ce que** les informations de réseau du second réseau sont obtenues par le dispositif de premier réseau depuis un dispositif de second réseau via une interface connectée au dispositif de second réseau.

5. Procédé pour fournir des informations de réseau pour un terminal selon la revendication 4, **caractérisé en ce que** le dispositif de second réseau est l'un quelconque d'un serveur d'authentification-autorisation-comptabilité dans le premier réseau, d'un serveur de courtier d'authentification-autorisation-comptabilité dans le premier réseau, d'un serveur de mandataire d'authentification-autorisation-comptabilité dans le premier réseau, d'un serveur d'authentification-autorisation-comptabilité dans le second réseau interconnecté avec le premier réseau, d'un serveur de courtier d'authentification-autorisation-comptabilité dans le second réseau interconnecté avec le premier réseau et d'un serveur de mandataire d'authentification-autorisation-comptabilité dans le second réseau interconnecté avec le premier réseau.

6. Procédé pour fournir des informations de réseau pour un terminal selon l'une quelconque des revendications 1 à 5, **caractérisé en ce que** les informations de réseau du second réseau comprennent un ou plusieurs d'un domaine domestique d'identifiant d'accès réseau, d'informations de protocole d'authentification extensible, d'informations de réseau cellulaire 3GPP, d'informations de type adresse IP, d'une liste de consortium d'itinérance, d'informations de type d'authentification de réseau, d'informations de taux de charge de réseau et d'informations de décompte de charge de réseau.

7. Système pour fournir des informations de réseau pour un terminal, **caractérisé en ce qu'**il comprend :
un module de réception (41) conçu pour recevoir une demande d'interrogation qui est envoyée par un terminal situé actuellement dans un premier réseau et qui est utilisée pour interroger des informations de réseau d'un second réseau, lequel premier réseau est un réseau non domestique du terminal et lequel second réseau est un réseau domestique du terminal ou un réseau non domestique du terminal ;
un module d'obtention (42) qui est conçu pour obtenir les informations de réseau du second réseau depuis un dispositif de premier réseau via une interface connectée au dispositif de premier réseau ; et
un module d'envoi (43) qui est conçu pour envoyer les informations de réseau obtenues du second réseau au terminal ;
dans lequel le dispositif de premier réseau est l'un quelconque d'un serveur d'authentification-autorisation-comptabilité dans le premier réseau, d'un serveur de courtier d'authentification-autorisation-comptabilité dans le premier réseau, d'un serveur de mandataire d'authentification-autorisation-comptabilité dans le premier réseau, d'un serveur d'authentification-autorisation-comptabilité dans le second réseau interconnecté avec le premier réseau, d'un serveur de courtier d'authentification-autorisation-comptabilité dans le second réseau interconnecté avec le premier réseau et d'un serveur de mandataire d'authentification-autorisation-comptabilité dans le second réseau interconnecté avec le premier réseau.

8. Système selon la revendication 7, **caractérisé en ce que** le module d'obtention est spécifiquement conçu pour envoyer la demande d'interrogation au dispositif de premier réseau via l'interface connectée au dispositif de premier réseau, la demande d'interrogation étant utilisée pour interroger les informations de réseau du second réseau ; et recevoir les informations de réseau du second réseau renvoyées par le dispositif de premier réseau.

9. Système selon la revendication 7, **caractérisé en ce que** le module d'obtention est spécifiquement conçu pour recevoir via l'interface connectée au dispositif de premier réseau, les informations de réseau du second réseau activement mises en avant par le dispositif de premier réseau vers le serveur ANQP une fois que les informations de réseau du second réseau sont mises à jour.

10. Système selon l'une quelconque des revendications 7 à 9, **caractérisé en ce que** les informations de réseau du second réseau comprennent un ou plusieurs d'un domaine domestique d'identifiant d'accès réseau, d'informations de protocole d'authentification extensible, d'informations de réseau cellulaire 3GPP, d'informations de type adresse IP, d'une liste de consortium d'itinérance, d'informations de type d'authentification de réseau, d'informations de taux de charge de réseau et d'informations de décompte de charge de réseau.

11. Produit de type programme informatique, **caractérisé en ce qu'**il comprend un code de programme informatique qui, lorsqu'il est exécuté par une unité informatique, fait que l'unité informatique va effectuer les étapes du procédé selon l'une quelconque des revendications 1 à 6.

12. Support lisible par ordinateur, **caractérisé en ce que** le code de programme informatique selon la revendication 11 est stocké sur le support lisible par ordinateur.
